# EUROPÄISCHE PATENTSCHRIFT

(11) **EP 2 469 077 B1**
(45) Veröffentlichungstag und Bekanntmachung des Hinweises auf die Patenterteilung: **27.05.2020**
(21) Anmeldenummer: 12159358.6
(22) Anmeldetag: 19.12.2003
(51) Int. Cl.: F03D 1/06, B64C 27/46

(54) **Windenergieanlage mit einem Rotorblatt**
Wind turbine with a wind turbine blade
Éolienne avec pale de rotor

(30) Priorität: 02.01.2003 DE 10300284; 31.01.2003 DE 10303824
(43) Veröffentlichungstag der Anmeldung: 27.06.2012
(62) Teilanmeldung aus: 03814464.8
(73) Patentinhaber: Wobben Properties GmbH, 26607 Aurich (DE)
(72) Erfinder: Wobben, Aloys, 26607 Aurich (DE)
(74) Vertreter: Eisenführ Speiser

(56) Entgegenhaltungen:
- WO-A1-02/48546
- DE-A1- 2 944 718
- DE-A1- 19 738 278
- DE-A1- 19 963 252
- FR-A1- 2 292 878
- US-A- 4 324 530
- IMAMURA H ET AL: "Numerical analysis of the horizontal axis wind turbine with winglets", JOURNAL OF THE JAPAN SOCIETY OF MECHANICAL ENGINEERS, JAPAN SOCIETY OF MECHANICAL ENGINEERS, TOKYO, JP, Bd. 41, Nr. 1, 1. Januar 1998 (1998-01-01) , Seiten 170-176, XP003027665, ISSN: 0021-4728

## Beschreibung

Die vorliegende Erfindung betrifft ein Rotorblatt für eine Windenergieanlage, mit einem eine Rotorblattvorderkante und eine Rotorblatthinterkante aufweisenden aerodynamischen Profil. Weiterhin betrifft die vorliegende Erfindung eine Rotorblattspitze für ein Rotorblatt mit einem eine Druck- und eine Saugseite aufweisenden aerodynamischen Profil, wobei die Rotorblattspitze in ihrem Endbereich in Richtung der Druckseite des Rotorblattes abgebogen oder abgewinkelt ist.

Solche Rotorblätter und Rotorblattspitzen sind im Stand der Technik seit langer Zeit bekannt. Insbesondere abgebogene Rotorblattspitzen werden z. B. bei Rotorblättern des Herstellers Enercon seit einiger Zeit verwendet. Diese bekannten Rotorblattspitzen sollen die zwangsläufig am Rotorblattende entstehenden Randwirbel verringern und damit die Entstehung unerwünschten Schalls verringern.

Als Stand der Technik wird an dieser Stelle allgemein auf folgende Druckschriften hingewiesen: DE 197 38 278; DE 197 43 694; DE 44 40 744; DE 196 14 420 sowie DE 44 36 197.

Ferner ist aus DE 2944718 ein Rotor für Windkraftanlagen in Leichtbauweise bekannt, wobei aus dem Dokument bekannt ist, dass der Rotor Rotorblätter aufweist, die jeweils eine Rotorblattspitze aufweisen und die Rotorblattspitzen auch verschiedene Ausgestaltungen aufweisen können. z.B. auch stumpf abgeschnitten sein können aber auch spitz zulaufend ausgestaltet sein können.

Weiterhin sind Rotorblätter der eingangs genannten Art bekannt, deren Spitzen elliptisch auslaufen. Auch diese Ausbildung der Rotorblattspitzen soll vom Rotorblatt bzw. insbesondere von dessen Spitze ausgehende Schallemissionen verringern.

Da Windenergieanlagen inzwischen keine Einzelphänomene mehr sind, sondern vielerorts anzutreffen sind, finden sie sich auch zunehmend in der Nähe von Wohngebieten. Gerade dort ist die Akzeptanz von Windenergieanlagen u.a. von der Schallemission abhängig und es ist leicht nachvollziehbar, dass leisere Windenergieanlagen eher akzeptiert werden als laute.

Aufgabe der vorliegenden Erfindung ist es daher, die Schallemissionen von Windenergieanlagen weiter zu verringern.

Ein Rotorblatt für eine Windenergieanlage wird vorgeschlagen, das nicht Teil der beanspruchten Erfindung ist, wobei das Rotorblatt in seinem Endbereich in Richtung der Hinterkante des Rotorblattes in der Rotorblattebene abgebogen oder abgewinkelt ist. Dabei liegt die Erkenntnis zugrunde, dass bei einem sich an der Spitze nicht zuspitzenden Rotorblatt die wirksame Rotorblattoberfläche gerade im äußeren Bereich, in welchem die Wirkung am größten ist, unverringert erhalten bleibt. Durch das Abbiegen bzw. Abwinkeln des Endbereiches des Rotorblattes wird jedoch die Hinterkante im Endbereich des Rotorblattes nach hinten verlegt, so dass sich die Strömung an der Rotorblatthinterkante mit einem zeitlichen Versatz im äußeren Bereich löst. Damit wird auch die Beeinflussung der beim Lösen der Strömung von der Rotorblatthinterkante entstehenden Wirbel untereinander und somit auch die davon ausgehende Schallemission verringert. Gerade bei einem Luv-Läufer wird durch die Erfindung auch die Wechselwirkung zwischen Blattspitzenumströmung und Turmvorstau vermindert.

Dabei ist der zeitliche Versatz von dem Winkel abhängig, in dem der Endbereich zur Fädelachse des Rotorblattes verläuft. Je größer der Winkel ist, um so besser gelingt die Verringerung von Schallemissionen. Da aber andererseits mit zunehmender Feilung auf das Rotorblatt wirkende Torsionsmomente zunehmen, hat sich ein Winkel von 1 bis 45 Grad, bevorzugt von 1 bis 15 Grad, als vorteilhaft erwiesen.

Weiterhin ist ein fließender Übergang vom Rotorblatt in den Endbereich vorteilhaft, da sich bei einem schroffen Abknicken im Bereich des Knicks zusätzliche Druckschwankungen ergeben. Diese können zu einer Leistungsminderung und zu zusätzlichen Geräuschen führen.

Bevorzugt weist das Rotorblatt in seinem Endbereich einen vorgegebenen Krümmungsradius auf, wobei die Krümmung besonders bevorzugt zur Rotorblattspitze hin zunimmt, d. h., der Krümmungsradius wird kleiner. Durch eine geeignet gewählte Krümmung kann der Endbereich des Rotorblattes mechanisch in einem Winkel von etwa 5 Grad abgebogen sein, während sich eine aerodynamische Wirkung ergibt, die einem Winkel von 10 Grad entspricht. Dadurch wird ein günstiges akustisches Ergebnis bei gleichzeitig ebenfalls günstigem aerodynamischem Verhalten verwirklicht.

Durch diese Feilung entstehen jedoch gleichzeitig größere Torsionsmomente in dem Rotorblatt, die auch auf den Rotorblattanschluss wirken. Dies führt natürlich auch zu einer dauerhaft höheren Beanspruchung der Anlage. Um diese höhere Belastung jedenfalls für den Rotorblattanschluss und die nachfolgenden Komponenten der Windenergieanlage auszugleichen, ist besonders vorteilhaft ein mittlerer Bereich des Rotorblattes, also ein Bereich zwischen der Rotorblattwurzel und dem in Richtung der Hinterkante gefeilten Endbereich, in Richtung der Blattvorderkante abgebogen. Dabei ist diese Abbiegung so bemessen, dass die äußere Hinterkante des gefeilten Endbereichs nicht tiefer ist als bei einem Blatt ohne einen gefeilten Endbereich.

Auf diese Weise entstehen in dem Rotorblatt selbst entgegengesetzt wirkende Torsionsmomente, die sich bei geeigneter Auslegung aufheben, so dass zwar das Rotorblatt selbst nach wie vor dieser Belastung unterworfen ist, jedoch der Rotorblattanschluss und die weiteren Komponenten der Windenergieanlage keine zusätzlichen Lasten aufnehmen müssen.

Um einerseits eine einfache Montage und andererseits eine Nachrüstung bereits vorhandener Rotorblätter zu erlauben, ist der Endbereich bevorzugt als in das Rotorblatt einsetzbares Teil ausgestaltet und weist vorzugsweise eine Länge von nicht mehr als 1/3 der Rotorblattlänge und insbesondere bevorzugt von ca. 1/10 der Rotorblattlänge auf.

Dabei kann dieser Endbereich in einer vorteilhaften Weiterbildung hohl ausgeführt sein und an seinem der Abströmung abgewandten Ende eine Öffnung zum Entwässern aufweisen, so dass sich im Rotorblatt sammelnde Flüssigkeit, die sich z. B. in Folge von Kondensationsvorgängen bildet und durch Zentrifugalkraft zur Rotorblattspitze transportiert wird, aus dem Endbereich austreten und damit aus dem Rotorblatt entfernt werden kann.

Um die Wirkung des erfindungsgemäßen Endbereiches zu unterstützen, ist eine Rotorblattspitze für ein Rotorblatt mit einem solchen Endbereich vorgesehen, wobei die Rotorblattspitze als selbständiges, in den Endbereich des Rotorblattes einsetzbares Teil ausgestaltet ist.

Alternativ wird zur Lösung der Aufgabe eine Windenergieanlage gemäß Anspruch 1 vorgeschlagen. Dieser Ausbildung liegt die Erkenntnis zugrunde, dass durch die sich verringernde Blatttiefe eine verringerte Umströmung der Blattspitze erfolgt, da sich deren Energie vorher auf die Hinterkantenwirbel verteilt, aber gleichzeitig auch die wirksame Rotorblattoberfläche verringert wird. Durch das Abwinkeln der Rotorblattspitze bleibt die wirksame Rotorblatttiefe bis zur abgewinkelten Rotorblattspitze hin optimal. Der sich zuspitzende Bereich verläuft in einem vorgegebenen, bevorzugten Winkel von der Rotorblattebene weg in Richtung der Druckseite des Rotorblattes. Dabei wird der Wirbel an der Rotorblattspitze gleichzeitig aus der Rotorblattebene herausgelöst und in eine andere Ebene verlegt. Dies wirkt sich wiederum günstig auf die Schallemission des mit einer solchen Spitze ausgestatteten Rotorblattes aus und verringert gleichzeitig am Rotorblatt auftretende Verluste. Dies betrifft sowohl die Randwirbelverluste und den aerodynamischen Wirkungsgrad, der sich durch eine geeignete Auslegung verbessern lässt, wie auch eine günstige Gestaltung des Druckgefälles zwischen Druck- und Saugseite.

Besonders bevorzugt ist der Außenbereich der Rotorblattspitze aus der Horizontalen in einem Winkel von ca. 70° bis 90° aus der Horizontalen abgebogen. Anders ausgedrückt schließt die Rotorblattspitze mit dem Rotorblatt einen Winkel von ca. 110° bis 90° ein. Bei empirischen Untersuchungen haben sich bei diesen Winkeln die günstigsten Ergebnisse gezeigt.

Erfindungsgemäß ist die Rotorblattspitze als selbständiges, in das Rotorblatt einsetzbares Teil ausgestaltet. Darüber hinaus ist die Rotorblattspitze hohl ausgeführt und besteht bevorzugt aus Metall, insbesondere Aluminium. Durch die hohle Ausführung kommt es zu einer Gewichtsverringerung und damit zu einer leichteren Handhabbarkeit.

Darüber hinaus kann eine hohle Rotorblattspitze ebenso wie ein oben beschriebener, hohler Endbereich eines Rotorblattes, z. B. zur Beseitigung bzw. Verminderung von Eisansatz, von Warmluft durchströmt werden.

Außerdem kann eine aus Metall hergestellte Rotorblattspitze als Blitzfänger dienen und somit gefangene Blitze in eine geeignete Ableitvorrichtung weiterleiten, um dadurch die Windenergieanlage im Fall eines Blitzeinschlages wirksam zu schützen. Vorteilhafte Weiterbildungen der Erfindung sind in den Unteransprüchen angegeben. Nachfolgend wird die Erfindung anhand der Figuren näher beschrieben. Dabei zeigen:
- Figur 1: eine Draufsicht auf ein Rotorblatt mit einem abgehobenen Endbereich gemäß einer ersten nicht beanspruchten Ausführungsform;
- Figur 2: ein Rotorblatt mit einem abgebogenen Endbereich gemäß einer zweiten nicht beanspruchten Ausführungsform;
- Figur 3: eine weitere Darstellung der zweiten Ausführungsform;
- Figur 4: noch eine weitere Darstellung der zweiten Ausführungsform;
- Figur 5: eine dritte nicht beanspruchte Ausführungsform eines gefeilten Rotorblattes;
- Figur 6: eine Seitenansicht einer erfindungsgemäßen Rotorblattspitze;
- Figur 7: eine Vorderansicht einer Ausführungsform einer erfindungsgemäßen Rotorblattspitze;
- Figur 8: eine Vorderansicht einer alternativen Ausführungsform einer erfindungsgemäßen Rotorblattspitze;
- Figur 9: eine Vorderansicht einer alternativen Ausführungsform einer erfindungsgemäßen Rotorblattspitze; und
- Figur 10: eine Darstellung eines Rotorblattes mit einem nicht erfindungsgemäß ausgebildeten Endbereich und einer Rotorblattspitze.

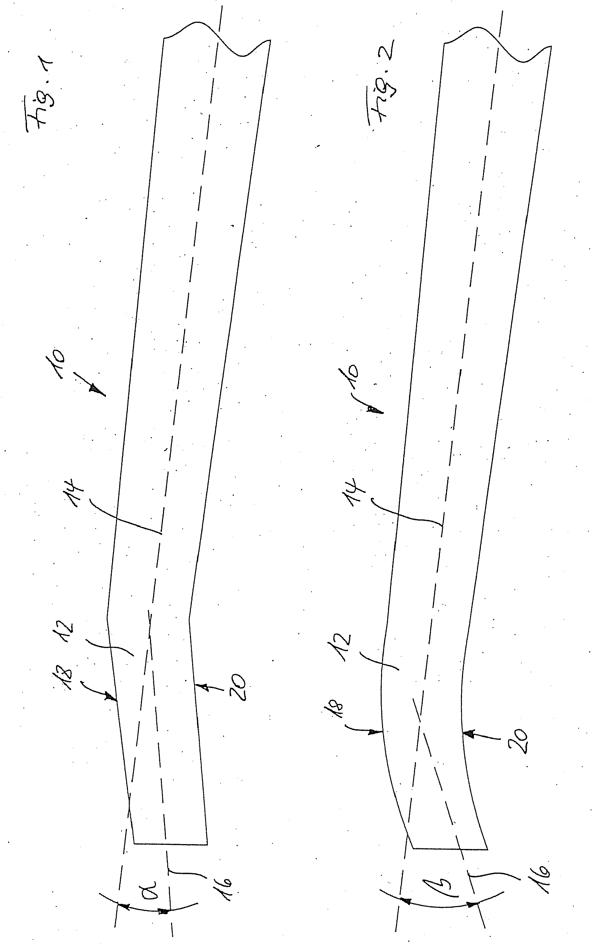

In Figur 1 ist ein Rotorblatt 10 einer Windenergieanlage gezeigt. In diesem Rotorblatt 10 ist die Fädelachse 14 angedeutet. Die Fädelachse 14 ist eine gedachte Achse, auf die alle Teile eines Rotorblattes 10 aufzufädeln sind, damit sich die gewünschte Rotorblattform ergibt.

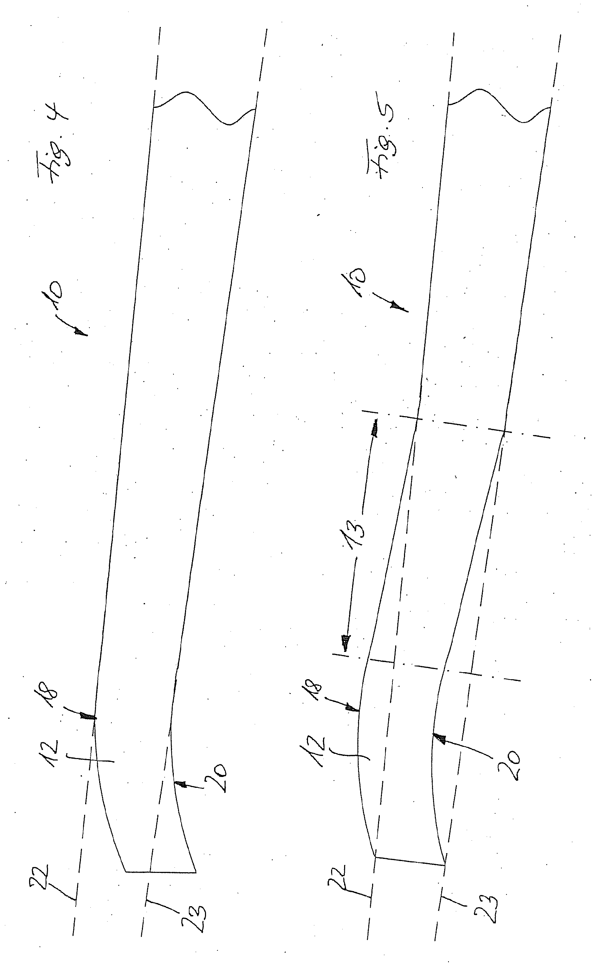

Der Endbereich 12 des Rotorblattes 10 ist in einem vorgegebenen Winkel α gegenüber einer ersten Fädelachse 14 abgeknickt. Für den Endbereich 12 ist eine zweite Fädelachse 16 dargestellt und zwischen den beiden Fädelachsen 14, 16 ist der Winkel α angegeben. Dieser betrage in dieser Figur 5 Grad. Dieses Maß stellt einen akzeptablen Kompromiss zwischen verringerter Schallemission und erhöhter Belastung dar.

Dabei ist der Endbereich in der Rotorblattebene in Richtung der Rotorblatt-Hinterkante 20 abgeknickt. Dieses Abknicken führt einerseits zu einer längeren Hinterkante und damit zu einer breiteren Verteilung der Wirbelenergie. Andererseits löst sich die Strömung an der Hinterkante des Rotorblattes 10 in dem abgeknickten Endbereich 12 später ab als in dem geraden Bereich des Rotorblattes 10. Dadurch entstehen die Geräusche erzeugenden Wirbel entsprechend später.

Eine verbesserte Ausführungsform eines Rotorblattes 10 ist in Figur 2 gezeigt. Auch in dieser Figur sind die Fädelachsen 14, 16 eingezeichnet. Allerdings erfolgt der Übergang vom Rotorblatt 10 in den Endbereich 12 hier nicht in einem scharfen Knick, sondern verläuft eher stetig in Form einer Krümmung. Allerdings nimmt die Krümmung zur Rotorblattspitze hin zu. Der Krümmungsradius wird also zur Rotorblattspitze hin kleiner.

In dem Endbereich 12 ist in diesem Fall der Bogentangente an der Spitze der Rotorblatthinterkante 20 und zur Rotorblattmitte hin parallelverschoben. Zwischen den Fädelachsen 14, 16 ist ein Winkel β angegeben. Dieser betrage 10 Grad.

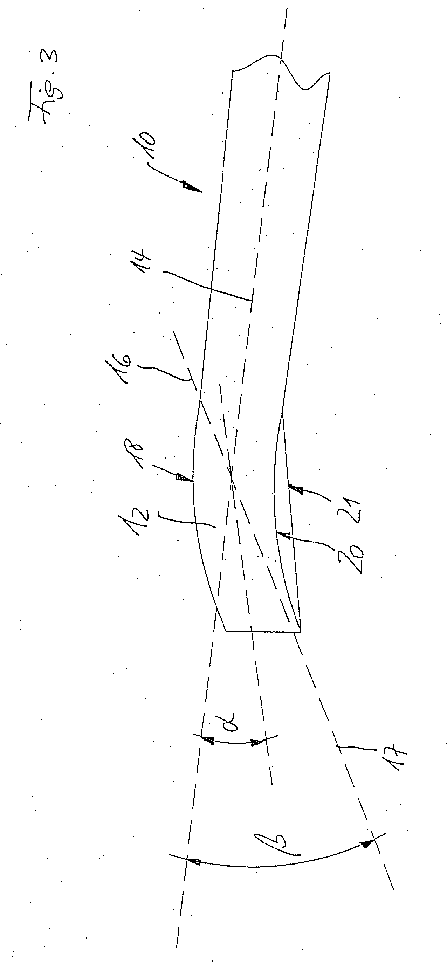

Diese 10 Grad ergeben sich eben aus dem Verlauf der Bogentangente an der Rotorblattspitze, wobei die ausgeführte Feilung des Rotorblattes 10 aber nicht größer ist, als bei dem in Figur 1 dargestellten Rotorblatt 10. Entsprechend weicht das aerodynamische Verhalten von dem in Figur 1 gezeigten Rotorblatt nur geringfügig ab, während das akustische Verhalten aber aufgrund des größeren Winkels β besser ist. Dieser vorstehend dargelegte Sachverhalt wird anhand von Figur 3 noch eingehender erläutert. In dieser Figur ist insbesondere der Endbereich 12 des Rotorblattes 10 dargestellt. Die Hinterkante des Endbereiches 12 ist dabei einmal entsprechend der in Figur 1 gezeigten Ausführungsform abgeknickt dargestellt. Diese Variante ist mit den Bezugszeichen 21 bezeichnet. Gleichzeitig ist auch die Ausführungsform mit der gebogenen Hinterkante 20 dargestellt.

Hier ist deutlich erkennbar, dass die äußerste Rotorblattspitze an den Hinterkanten 20 und 21 jeweils am gleichen Punkt liegt; die Rotorblatttiefe ist also aus aerodynamischer Sicht unverändert.

In dieser Figur ist weiterhin die erste Fädelachse 14 (ursprüngliche Blattfädelachse) angegeben. Weiterhin ist die parallel verschobene Bogentangente 17 und die zweite Fädelachse 16 (Tip-Fädelachse) entsprechend der Hinterkante 21 des Endbereichs eingetragen. Die Winkel α und β sind ebenfalls dargestellt. Der Winkel α betrage wiederum 5 Grad. Er wird gebildet durch die erste Fädelachse 14 des Rotorblattes 10 und die zweite Fädelachse 16 entsprechend der in Figur 1 gezeigten Ausführungsform des Rotorblattes. Der Winkel β ist eingeschlossen zwischen der ersten Fädelachse 14 und der Bogentangente 17 entsprechend der in Figur 2 dargestellten Ausführungsform. Der Winkel β betrage 10 Grad.

Hier ist also der Vorteil der in Figur 2 dargestellten Ausführungsform besonders gut erkennbar.

Figur 4 zeigt nochmals das erfindungsgemäß gefeilte Rotorblatt 10 mit der Vorderkante 18, der Hinterkante 20 und dem in Richtung der Hinterkante 20 gefeilten Endbereich 12. Weiterhin sind in dieser Figur zwei Linien 22, 23 dargestellt, die den Verlauf der Vorderkante 18 und der Hinterkante 20 ohne den gefeilten Endbereich 12 darstellen. Bereits in dieser Figur ist gut zu erkennen, in welchem Maß der Endbereich 12 durch die Feilung in Richtung der Hinterkante 20 des Rotorblattes 10 gefeilt ist.

In Figur 5 ist eine alternative Ausführungsform des Rotorblattes 10 gezeigt, dass sich von dem in Figur 4 dargestellten durch einen mittleren Abschnitt 13 unterscheidet, der in Richtung der Vorderkante 18 des Rotorblattes 10 gefeilt ist. Natürlich gilt auch für diese Feilung der Vorteil des fließenden Übergangs zwischen den einzelnen Bereichen des Rotorblattes 10. Dabei ist diese Feilung in Richtung der Vorderkante 18 so bemessen, dass der äußerste Punkt des in Richtung der Hinterkante 20 gefeilten Endbereiches 12 des Rotorblattes wieder innerhalb der gestrichelten Linien 22, 23 liegt, welche auch in dieser Figur den gedachten, geradlinigen Verlauf des Rotorblattes angeben.

Daraus resultieren einander entgegengesetzt wirkende Torsionsmomente in dem Endbereich 12 und dem mittleren Bereich 13 des Rotorblattes, die sich bei geeigneter Bemessung in ihrer Wirkung am Rotorblattanschluss aufheben.

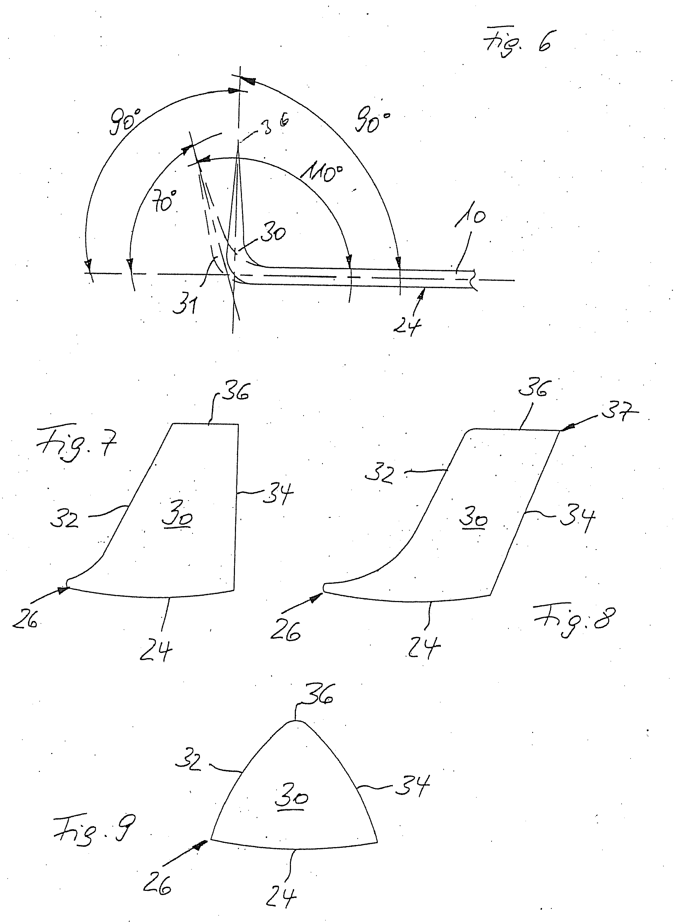

Figur 6 zeigt ein Rotorblatt 10 mit einem erfindungsgemäßen Randbogen 30, der von der Saugseite 24 des Rotorblattes 10 weg, also zur Druckseite des Rotorblattes 10 hin verläuft. Die Oberkante 36 des Randbogens weist eine möglichst geringe Profildicke auf, um den sich dort ablösenden Randwirbel so gering wie möglich zu halten, damit eine ebenfalls möglichst geringe Schallemission entsteht.

Der Randbogen 30 ist bevorzugt in einem Winkel von ca. 60° bis 90° aus der Horizontalen abgebogen. D. h., er schließt mit dem Rotorblatt einen Winkel zwischen 120° und 90° ein. Dieser Bereich wird durch zwei aufwärts abgebogene Abschnitte 30, 31 dargestellt, von denen einer mit einer gestrichelten Linie dargestellt ist.

In Figur 7 ist eine erste Ausführungsform des erfindungsgemäßen Randbogens 30 in der Vorderansicht dargestellt. In dieser Figur verläuft die Hinterkante 34 des Randbogens 30 sowie die Oberkante 36 des Randbogens geradlinig, während die Vorderkante 32 zwischen der Rotorblatt-Vorkante 26 und der Randbogen-Oberkante 36 von der Saugseite 24 des Rotorblattes weg mit einem vorgegebenen Winkel verläuft. Dadurch verkürzt sich die Randbogen-Oberkante 36 gegenüber der Tiefe des Rotorblattes, erkennbar an der Rotorblatt-Saugseite 24. Das Rotorblatt hat also bis zum Randbogen 30 hin seine aerodynamisch voll wirksame Tiefe und geht erst im Randbogen 30 in eine kürzere Randbogen-Oberkante 36.

Gleichzeitig wird der an der Rotorblatt-Oberkante 36 abreißende Randwirbel aus der Ebene des Rotorblattes 10 herausgeführt, so dass der Randwirbel von der Blattebene weggeführt wird.

Figur 8 zeigt eine alternative Ausführungsform des in Figur 7 gezeigten Randbogens. Während in Figur 7 eine im Wesentlichen senkrecht zur Rotorblattlängsachse verlaufende Randbogen-Hinterkante 34 dargestellt ist, ist auch dieser Randbogen in Figur 8 in Richtung der Hinterkante 34 gefeilt. Durch diese Feilung wird der Ablösepunkt 37, in dem sich die Strömung von diesem Randbogen löst, noch weiter nach hinten verlegt und entsprechend wird die Energie der Randwirbel noch weiter verteilt und die Schallemission ist noch weiter verringert.

Das Wirkprinzip ist bei der in Figur 9 gezeigten Ausführungsform des Randbogens 30 ähnlich. Allerdings ist dieser Randbogen 30 auf einen möglichst geringen Randwirbel hin optimiert. Dazu verlaufen die Randbogen-Vorderkante 32 und die Randbogen-Hinterkante 34 mit einer vorgegebenen geschwungenen, besonders bevorzugt elliptischen Steigung zu der Randbogen-Oberkante 36 hin. Dabei ist die Randbogen-Oberkante 36 wiederum von der Rotorblatt-Saugseite 24 fort, also zu der Druckseite hin aus der Rotorblattebene abgebogen.

Durch die elliptische Ausbildung der Randbogen-Vorderkante 32 und der Randbogen-Hinterkante 34 wird gleichzeitig die Strecke verlängert, auf welcher sich die Strömung vom Rotorblatt löst. Dies führt ebenfalls zu einer verringerten Schallemission, da eine Umströmung der Blattspitze anders als bei stumpf auslaufenden Blattgeometrien weitestgehend entfällt.

Das Verhältnis von Tiefe zu Höhe (die Tiefe ist in Fig. 9 in der Aufsicht die Breite) des abgewinkelten Abschnitts des Randbogens beträgt etwa 1:0,8 bis 1,2, bevorzugt 1:1. Das Verhältnis der Höhe des abgewinkelten Abschnitts des Randbogens zur Tiefe des Rotorblatts am Anschluss des Randbogens beträgt etwa 1:1 bis 1:1,3, bevorzugt 1:1,14. Dabei ist der Tiefenverlauf im abgewinkelten Abschnitt des Randbogens annähernd hyperbolisch (in der Aufsicht die Profilbreite) und der oberste Kappenpunkt des äußersten Profilschnittes liegt bei etwa 30 bis 40%, bevorzugt 33% Profiltiefe, bezogen auf die Fädelachse des Blattes.

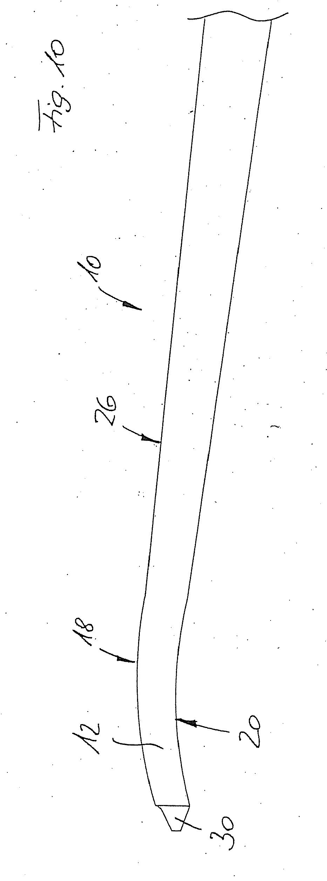

Figur 10 zeigt ein Rotorblatt 10 mit einer Kombination aus abgebogenem Endbereich 12 und daran anschließenden Randbogen 30. Dabei ist die Abbiegung des Endbereiches 12 von der Vorderkante 26 des Rotorblattes hin zu der Hinterkante 20 sowie eine Abbiegung des Randbogens 30 aus der Rotorblattebene heraus deutlich erkennbar. Entsprechend vereinigen sich hier die vorteilhaften akustischen Wirkungen des abgebogenen Endbereichs 12 einerseits und des abgewinkelten Randbogens 30 andererseits.

Das beschriebene erfindungsgemäße Rotorblatt ist Teil eines Rotors einer Windenergieanlage.

## Patentansprüche

1. Windenergieanlage vom Luvläufertyp, mit einem Rotor, der mit wenigstens einem Rotorblatt ausgestattet ist, wobei das Rotorblatt eine Rotorblattspitze aufweist und das Rotorblatt mit einem eine Druck- und eine Saugseite aufweisendes aerodynamischen Profil aufweist, wobei die Rotorblattspitze in ihrem Außenbereich in Richtung der Druckseite des Rotorblattes abgebogen oder abgewinkelt ist, sodass die Rotorblattspitze mit dem Rotorblatt einen Winkel von circa 90 - 120 Grad einschließt und sich der Außenbereich verjüngt, und wobei das Rotorblattprofil im Bereich der Biegung fließend in das Profil des Außenbereichs übergeht und die Rotorblattspitze (30) als selbstständiges, in das Rotorblatt (10) einsetzbares Teil ausgestaltet ist.

2. Windenergieanlage nach Anspruch 1,
**dadurch gekennzeichnet, dass** die Querschnittsebene des Außenbereichs in einem vorgegebenen Winkel zu der Querschnittsebene des übrigen Rotorblattes (10) verläuft.

3. Windenergieanlage nach einem der Ansprüche 1 oder 2,
**dadurch gekennzeichnet, dass** die Rotorblattspitze (30) einen im Querschnitt verringerten Bereich zum Einsetzen in das Rotorblatt (10) aufweist.

4. Windenergieanlage nach Anspruch 3,
**dadurch gekennzeichnet, dass** in dem im Querschnitt verringerten Bereich wenigstens eine Aussparung vorhanden ist.

5. Windenergieanlage nach einem der Ansprüche 1 bis 4,
**dadurch gekennzeichnet, dass** die Rotorblattspitze (30) hohl ausgeführt ist.

6. Windenergieanlage nach Anspruch 5,
**dadurch gekennzeichnet, dass** an ihrem der Anströmung abgewandten Ende eine Öffnung zum Entwässern vorhanden ist.

7. Windenergieanlage nach Anspruch 6,
**dadurch gekennzeichnet, dass** sich an die Öffnung ein Röhrchen anschließt.

8. Windenergieanlage nach einem der Ansprüche 1 bis 7,
**dadurch gekennzeichnet, dass** die Rotorblattspitze (30) aus Metall, insbesondere Aluminium, besteht.

9. Windenergieanlage nach einem der Ansprüche 1 bis 8,
**dadurch gekennzeichnet, dass** das Rotorblatt (10) aus glasfaserverstärktem Kunststoff besteht und dass leitfähige Elemente zum Blitzableiten in das Rotorblatt (10) eingearbeitet sind, die mit der Rotorblattspitze (30) in leitendem Kontakt stehen.

## Claims

1. Wind power plant of the windward type comprising a rotor provided with at least one rotor blade, wherein the rotor blade comprises a rotor blade tip and the rotor blade comprises an aerodynamic profile having a pressure side and a suction side, wherein the rotor blade tip is curved or angled in its outer region in the direction of the pressure side of the rotor blade, so that the rotor blade tip encloses an angle of approximately 90 - 120 degrees with the rotor blade and the outer region narrows and wherein the rotor blade tip (30) is in the form of an independent portion which can be fitted into the rotor blade (10). in the region of the curve the rotor blade profile blends fluidly into the profile of the outer region.

2. Wind power plant according to claim 1,
**characterised in that** the cross-sectional plane of the outer region extends at a predetermined angle relative to the cross-sectional plane of the rest of the rotor blade (10).

3. Wind power plant according to claim 1 or 2,
**characterised in that** the rotor blade tip (30) has a region of reduced cross-section for fitting into the rotor blade (10).

4. Wind power plant according to claim 3,
**characterised in that** at least one opening is provided in the region of reduced cross-section.

5. Wind power plant according to one of claims 1 to 4,
**characterised in that** the rotor blade tip (30) is hollow.

6. Wind power plant according to claim 5,
**characterised in that** provided at its end averted from the oncoming flow is an opening for water drainage.

7. Wind power plant according to claim 6,
**characterised in that** a tube portion adjoins the opening.

8. Wind power plant according to one of claims 1 to 7,
**characterised in that** the rotor blade tip (30) comprises metal, in particular aluminium.

9. Wind power plant according to one of claims 1 to 8,
**characterised in that** the rotor blade (10) comprises glass fibre-reinforced plastic material and that conductive elements for lightning conduction are incorporated into the rotor blade (10) and are in conductive contact with the rotor blade tip (30).

## Revendications

1. Eolienne de type éolienne face au vent, avec un rotor, qui est équipé d'au moins une pale de rotor, dans laquelle la pale de rotor présente une pointe de pale de rotor et la pale de rotor présente un profil aérodynamique présentant un côté de pression et un côté d'aspiration, dans laquelle la pointe de pale de rotor est repliée ou coudée dans sa zone extérieure en direction du côté de pression de la pale de rotor de sorte que la pointe de pale de rotor forme avec la pale de rotor un angle d'environ 90 - 120 degrés et que la zone extérieure se rétrécit, et dans laquelle le profil de pale de rotor se confond dans la zone du cintrage avec aisance dans le profil de la zone extérieure et la pointe de pale de rotor (30) est configurée en tant que partie autonome pouvant être insérée dans la pale de rotor (10).

2. Eolienne selon la revendication 1,
**caractérisée en ce que** le plan de section transversale de la zone extérieure s'étend selon un angle prédéfini par rapport au plan de section transversale de la pale de rotor (10) restante.

3. Eolienne selon l'une quelconque des revendications 1 ou 2,
**caractérisée en ce que** la pointe de pale de rotor (30) présente une zone réduite dans la section transversale, destinée à être insérée dans la pale de rotor (10).

4. Eolienne selon la revendication 3,
**caractérisée en ce qu'**au moins un évidement est présent dans la zone réduite dans la section transversale.

5. Eolienne selon l'une quelconque des revendications 1 à 4,
**caractérisée en ce que** la pointe de pale de rotor (30) est réalisée de manière creuse.

6. Eolienne selon la revendication 5,
**caractérisée en ce qu'**une ouverture de vidange est prévue au niveau de son extrémité opposée à l'incidence du vent.

7. Eolienne selon la revendication 6,
**caractérisée en ce qu'**un petit tube se raccorde à l'ouverture.

8. Eolienne selon l'une quelconque des revendications 1 à 7,
**caractérisée en ce que** la pointe de pale de rotor (30) est constituée de métal, en particulier d'aluminium.

9. Eolienne selon l'une quelconque des revendications 1 à 8,
**caractérisée en ce que** la pale de rotor (10) est constituée d'une matière plastique renforcée par des fibres de verre, et que des éléments conducteurs parafoudres sont intégrés dans la pale de rotor (10), qui sont en contact conducteur avec la pointe de pale de rotor (30).
